# EUROPEAN PATENT APPLICATION

(11) **EP 4 793 088 A1**
(43) Date of publication of application: **19.08.2026**
(21) Application number: 25157705.2
(22) Date of filing: 13.02.2025
(51) Int. Cl.: B60L 53/60, B60L 53/30, B60L 53/66, H04L 9/32, H04L 9/40, B60L 53/65

(54) **METHOD FOR CONTROLLING AN ELECTRIC VEHICLE CHARGER AND ELECTRIC VEHICLE CHARGER**

(71) Applicant: ABB E-mobility B.V., 2629 JG Delft (NL)
(72) Inventor: VANSPAUWEN, Niels, 3511 Kuringen (BE); ALARCON, Daniel, 28043 Madrid (ES)
(74) Representative: Zimmermann & Partner Patentanwälte mbB

(57) **Abstract**

A method for controlling an electric vehicle charger (100) over a network by a user using a mobile device (110) of the user, the method comprising:
- providing, to the user's mobile device, an authentication token related to the electric vehicle charger, the authentication token being available to the user locally at a location of the electric vehicle charger;
- verifying, by the user's mobile device, the authentication token;
- obtaining, by the user's mobile device, an access token of the electric vehicle charger based on the verified authentication token;
- performing an opening handshake between the user's mobile device and the electric vehicle charger over the network based on the access token of the electric vehicle charger;
- upon the opening handshake, establishing a secure full-duplex communication channel (120) between the user's mobile device and the electric vehicle charger using a transmission control protocol connection over the network;
- receiving, by the electric vehicle charger, at least one command from the user's mobile device over the established secure full-duplex communication channel; and carrying out the received at least one command by the electric vehicle charger; and
- receiving, by the user's mobile device, status information data from the electric vehicle charger over the established secure full-duplex communication channel; and displaying the received status information data by the user's mobile device.

## Description

### FIELD

The present disclosure relates to an electric vehicle charger and a method for controlling an electric vehicle charger. The present disclosure relates in particular to a full-duplex communication channel between a user's mobile device and the electric vehicle charger using a transmission control protocol/internet protocol (TCP/IP).

### BACKGROUND

An electric vehicle charger is a device configured to charge the battery of an electric vehicle.

An electric vehicle charger is typically controlled by a controller, for example a controller on a single board computer (SBC) located at the electric vehicle charger.

The controller needs to handle a plurality of data and to control the electric vehicle charger based on the data, for example in order to identify the electric vehicle and/or to track the charging of the battery of the electric vehicle, e.g. to track the state of charge of the battery and the power delivered to the battery, and/or to provide information to a user (e.g. the owner or driver of the electric vehicle that is charged by the electric vehicle charger) in particular about the charging of the battery and/or about the payment of the electric energy used to charge the battery.

It is therefore beneficial to improve a control of an electric vehicle charger, providing an improved communication with the electric vehicle (EV) charger.

### SUMMARY

The invention is defined by the independent claims. The dependent claims define further embodiments of the invention.

According to an aspect, the present disclosure provides a method for controlling an electric vehicle charger over a network by a user using a mobile device of the user, the method comprising:
- providing, to the user's mobile device, an authentication token related to the electric vehicle charger, the authentication token being available to the user locally at a location of the electric vehicle charger;
- verifying, by the user's mobile device, the authentication token;
- obtaining, by the user's mobile device, an access token of the electric vehicle charger based on the verified authentication token;
- performing an opening handshake between the user's mobile device and the electric vehicle charger over the network based on the access token of the electric vehicle charger;
- upon the opening handshake, establishing a secure full-duplex communication channel between the user's mobile device and the electric vehicle charger using a transmission control protocol connection over the network;
- receiving, by the electric vehicle charger, at least one command from the user's mobile device over the established secure full-duplex communication channel; and carrying out the received at least one command by the electric vehicle charger; and
- receiving, by the user's mobile device, status information data from the electric vehicle charger over the established secure full-duplex communication channel; and displaying the received status information data by the user's mobile device.

According to another aspect the present disclosure provides an electric vehicle charger comprising a controller connected to a network, the electric vehicle charger configured to:
- provide to a user's mobile device an authentication token locally at a location of the electric vehicle charger;
- perform an opening handshake with the user's mobile device over the network based on an access token;
- upon the opening handshake, establish a secure full-duplex communication channel between the user's mobile device and the electric vehicle charger using a transmission control protocol connection over the network;
- receive at least one command from the user's mobile device over the established secure full-duplex communication channel; and to carry out the received at least one command; and
- send to the user's mobile device, status information data over the established secure full-duplex communication channel.

### BRIEF DESCRIPTION OF THE DRAWINGS

Embodiments of the present disclosure will be exemplarily illustrated with reference to the following figures:
FIG. 1 shows a secure full-duplex TCP/IP communication channel between a user's mobile device and an electric vehicle charger according to embodiments of the present disclosure and further shows a trusted infrastructure according to some embodiments of the present disclosure.
FIG. 2 illustrates a method for controlling an electric vehicle charger over a network by a user using a mobile device according to the present disclosure.

### DETAILLED DESCRIPTION OF EMBODIMENTS

A detailed description of embodiments of the present disclosure is described in the following.

Different embodiments can be combined with each other, unless otherwise state or unless they are mutually exclusive.

The expression "in one embodiment", "in some embodiments", "according to an embodiment", "according to embodiments" refer to general teachings of preferred embodiments which are combinable, if not otherwise explicitly stated and not mutually exclusive. Said expressions are therefore not intended as explicitly listing a specific delimited combination of features. Features of embodiments of the present disclosure are therefore combinable with other features and embodiments described herein. Common features of different embodiments may not be explicitly repeated in order to obtain a compact and readable description.

The expression "embodiment" or "some embodiments" refers to embodiments of the present disclosure, if not otherwise stated.

Features of methods of the present disclosure can be combined with features of corresponding systems of the present disclosure.

Features of systems of the present disclosure can be combined with features of corresponding methods of the present disclosure.

An electric vehicle (EV) charger typically needs to be controlled based on a plurality of data, for example data related to a state of charge of a battery of an electric vehicle that needs to be charged and/or to the electric vehicle itself.

According to known solutions, the communication between the electric vehicle charger and the electric vehicle may for example be established using the same power line that delivers the power from the electric vehicle charger to the battery of the electric vehicle and/or using a communication cable together with the power line, i.e. using a wired connection.

According to known solutions, the electric vehicle charger may be in communication with a charge point operator, e.g. using the Open Charge Point Protocol (OCPP).

An additional control of the EV charger with a mobile device of a user is beneficial to provide a more flexible control and/or to improve the comfort of the user when using the EV charger.

According to known solution, it is difficult or impossible for a user to control the EV charger with a mobile device of the user that may at most communicate indirectly with the EV charger using the mobile device with an indirect communication via one or more backends that cause a significant lag and/or an unsmooth user experience and/or that require the interfacing of different data formats with the possibility of malfunctions and errors during the communication.

The present disclosure provides a (direct) secure full-duplex TCP/IP communication channel between the user's mobile device and the EV charger.

The TCP/IP protocol is defined in the Internet protocol suite.

In particular, a TCP/IP (Transmission Control Protocol/Internet Protocol) communication channel is defined by a source IP (Internet Protocol) address and a source port number and a destination IP address and a destination port number.

The destination IP address and/or the source IP address may be resolved using a DNS (domain name system) server based on a hostname.

In the present disclosure, if not otherwise stated, a TCP/IP communication channel is a direct TCP/IP communication channel defined by the source IP address and source TCP port number and the destination IP address and destination TCP port number. A WebSocket and/or WebSocket Secure provides a direct full duplex TCP/IP communication between source and destination.

IP addresses may be IPv4 or IPv6 addresses.

Packets may be routed between the source and the destination according to any known implementation of a network and to any known routing technique.

The TCP/IP packets that are transmitted from the source to the destination include data that is typically encrypted using TLS (Transport Layer Security) to provide a secure communication channel with end-to-end encryption between source and destination.

The TLS encryption may be based on a public key of the destination of the TCP/IP communication channel as provided by a trusted Public Key Infrastructure (PKI) and in particular as published in a signed certificate of a certificate authority (CA) of the PKI.

Known implementations like NAT (network address translation) may be used to reach a source/destination in a private network and/or a specified proxy may be used to conveniently forward packets. Alternatively, or in addition a virtual private network (VPN) may be used.

In some embodiments where a proxy and/or NAT and/or VPN connection may be used, the source and/or destination IP address and/or TCP port of packets in transit may be modified based on the used proxy and/or NAT and/or VPN connection. In such embodiments, the modified IP source and/or destination address and/or TCP port number is still identified with the original IP source and/or destination address and/or TCP port number, and still a direct TCP/IP communication channel is assumed, as long as a TCP/IP communication between source and destination remains possible thorough known proxy and/or NAT and/or VPN connection. In such a case, still a (direct) TCP/IP communication channel is considered present. The end-to-end TLS encryption is maintained.

Conversely, when a connection between source and destination occurs over intermediate backends that do not form merely a proxy and/or NAT and/or VPN connection, in particular over backends that process and/or alter and/or decrypt data in the transmitted packages (as in known solution of a communication between a user's mobile device and an EV charger), then multiple communication TCP/IP communication channels are considered present and a (direct) communication channel between source and destination (e.g. the user's mobile device and the EV charger) is not present, i.e. no (direct) TCP/IP communication occurs between source and destination in the presence of backends that access and/or decrypt and/or alter data in IP packets in transit between the source and the destination. The end-to-end TLS encryption is not maintained.

The WebSocket protocol and WebSocket Secure protocol provide a full-duplex communication channel based on TCP/IP connection between source and destination and the WebSocket Secure protocol further provides TLS end-to-end encryption between source and destination within the full-duplex communication, i.e. implements a (direct) secure full-duplex communication between source and destination based on TCP/IP.

According to known solution, conversely, a (direct) secure full duplex communication channel between a user's mobile device and the electric vehicle charger using a TCP/IP connection over a network is not provided.

According to known solutions, a mobile device of the user may at most be connected to a trusted infrastructure forming a backend, for example a trusted infrastructure comprising cloud computers or servers of a charge point operator (CPO) that then may in turn communicate with the electric vehicle charger for example with the use of OCPP and without establishing a direct secure full-duplex communication channel between the user's mobile device and the electric vehicle charger using a TCP/IP connection over a network.

In particular, according to known solutions, the backend does not merely act as a proxy and/or VPN server and/or NAT device and does typically not maintain an end-to-end TLS encryption between source and destination.

In addition, in known solutions, the mobile device of the user may not even be configured to establish a connection with the trusted infrastructure/backend of the charge point operator as such, but may only establish a connection with a (typically third-party) backend server related to an application running on the user's mobile device and it may therefore be further necessary to establish an additional TCP/IP communication channel between the backend server of the application running on the user's mobile device and the trusted infrastructure of the CPO that then in turn communicates with the electric vehicle charger as such.

According to known solutions, the backend(s) typically access and/or decrypt and/or modify data inside the TCP/IP packets and do not merely act as a proxy and/or a VPN server and/or NAT device. The backend typically decrypts TLS data, i.e. does not maintain an end-to-end TLS encryption between source and destination (e.g. between the user's mobile device and the EV charger).

According to the present disclosure, conversely, a secure full-duplex communication channel between the user's mobile device and the electric vehicle charger using a TCP/IP connection over the network is provided. The connection may for example provide a WebSocket Secure connection between the user's device and the EV charger.

Said communication channel according to the present disclosure provides a secure direct TCP communication channel that does not require one or more backends.

According to the present disclosure, a secure full-duplex communication channel using the TCP/IP protocol between a source and a destination provides a direct communication based on the TCP/IP protocol between the source and the destination based on a source IP (Internet Protocol) address and port number and a destination IP address and port number, wherein the data is encrypted using TLS (transport layer security) encryption.

The secure communication channel according to the present disclosure is a direct channel without TLS encrypted package data being decrypted by intermediate backends. Proxies and/or NAT and/or VPN may be used.

The TLS encryption provides and end-to-end encryption between source and destination, based on a public key of the destination certified by a PKI, thereby providing a secure TCP/IP communication channel. The public key of the destination may be a public key of EV charger and/or of the charge point operator.

A secure full-duplex communication channel using TCP may for example be provided according to embodiments of the present disclosure using the WebSocket protocol, in particular the WebSocket Secure protocol, to establish a secure direct connection between the electric vehicle (EV) charger and the user's mobile device and vice versa, i.e. to establish a secure bidirectional TCP connection providing end-to-end TLS encryption between the user's mobile device and the EV charger.

A communication according to known solutions that involves a communication with one or more backends, like for example backends formed by a trusted infrastructure and/or a cloud and/or one or more servers of a charge point operator and/or of a third party providing an application on the user's mobile device is not a secure communication channel as defined in the present disclosure and does not involve a (direct) TCP/IP communication between the electric vehicle (EV) charger and the user's mobile device and/or vice versa. According to known solutions end-to-end TLS encryption between the user's mobile device and the EV charger is not maintained.

In fact, according to know solutions a plurality of TCP/IP communications may be involved, but no communication has as source the IP address of the electric vehicle charger and as destination the IP address of the user's mobile device and/or vice versa, i.e. all the communications according to known solution have as source and/or destination at least one IP address of a backend and do therefore not provide a communication channel between user's mobile device and EV charger using TCP/IP, at any time.

Known solution do not provide a secure full-duplex communication between EV charger and the user's mobile device.

Conversely, the secure full-duplex communication channel between the user's mobile device and the EV charger using a TCP/IP connection according to the present disclosure has as source IP address the IP address of the EV charger and as destination IP address the IP address of the mobile device of the user and/or vice versa. If proxies, NAT and/or VPN are used, a translated address and port is identified with the original address.

The secure full-duplex communication channel according to the present disclosure provides TLS security with end-to-end encryption between the EV charger and the user's mobile device and/or vice versa.

Establishing a secure full-duplex communication channel between the user's mobile device and the electric vehicle charger using a TCP/IP connection, i.e. a direct TCP/IP connection/a direct TCP/IP communication channel based on TLS, e.g. based on the WebSocket Secure protocol, according to the present disclosure, provides several benefits.

For example, according to the present disclosure, a near-instantaneous communication becomes possible and the complexity of the integration of the backends is avoided. In particular an integration between the CPO backend/CPO trusted infrastructure and a backend of a mobile application of the user is avoided.

In this way the integration of the mobile application with the charger is significantly simplified. Advantageously, a control of the EV charger is improved providing an improved session tracking, energy handling, payment handling, customer identification. In particular, the user can more conveniently control and monitor the EV charger form the user's mobile device, with an improved user experience as compared for example to a control directly at the EV charger.

The secure-full duplex channel between the user's mobile device and the EV charger using the TCP/IP connection according to the present disclosure ensures a secure communication avoiding the risk of being exposed to potentially malicious backends, in particular potentially malicious or compromised backends related to a mobile application running on the user's mobile device. A malicious or compromised backend may steal data and/or result in an erroneous or non-optimal function of the EV charger.

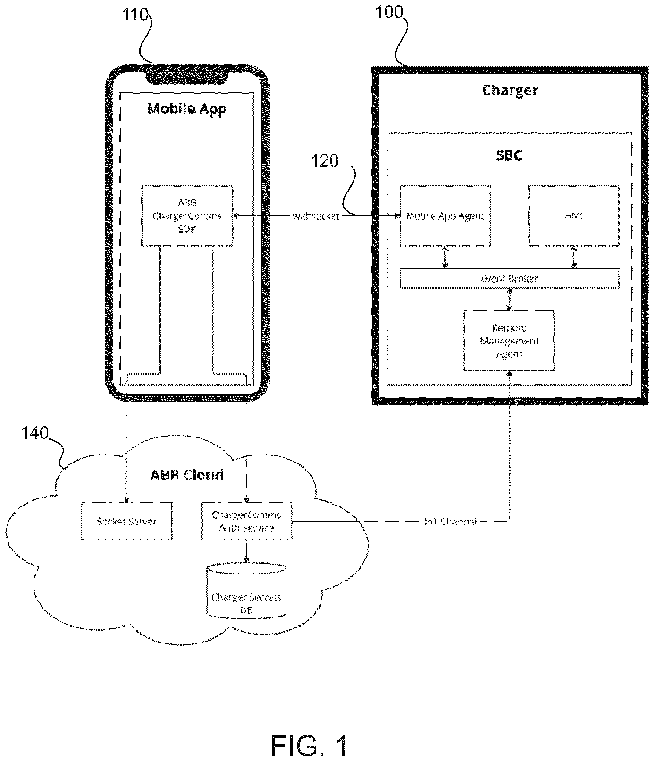

FIG. 1 shows a secure full-duplex communication channel 120 between a user's mobile device 110 and an electric vehicle charger 100 according to embodiments of the present disclosure and further shows a trusted infrastructure 140 according to some embodiments of the present disclosure.

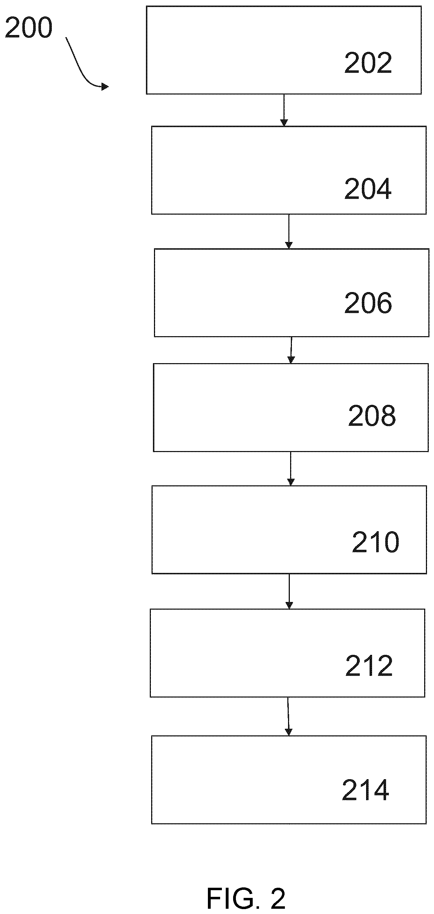

FIG. 2 illustrates a method 200 for controlling an electric vehicle charger 100 over a network by a user using a mobile device 110 according to embodiments of the present disclosure.

The present disclosure provides a method 200 for controlling an electric vehicle charger 100 over a network by a user using a mobile device 110 of the user, the method comprising:
- providing 202, to the user's mobile device, an authentication token related to the electric vehicle charger, the authentication token being available to the user locally at a location of the electric vehicle charger;
- verifying 204, by the user's mobile device, the authentication token;
- obtaining 206, by the user's mobile device, an access token of the electric vehicle charger based on the verified authentication token;
- performing 208 an opening handshake between the user's mobile device and the electric vehicle charger over the network based on the access token of the electric vehicle charger;
- upon the opening handshake, establishing 210 a secure full-duplex communication channel 120 between the user's mobile device and the electric vehicle charger using a TCP/IP connection over the network;
- receiving 212 , by the electric vehicle charger, at least one command from the user's mobile device over the established secure full-duplex communication channel; and carrying out the received at least one command by the electric vehicle charger; and
- receiving 214 , by the user's mobile device, status information data from the electric vehicle charger over the established secure full-duplex communication channel; and displaying the received status information data by the user's mobile device.

The authentication token is made available locally at the location of the electric vehicle charger and may be uploaded by the user's mobile device to a trusted infrastructure that validates the authentication token. In this way the user verifies the authentication token, i.e. that the authentication token related to the EV charger originates from the trusted charge point operator and not for example from a malicious third party.

The charge point operator may send to the user's mobile device and/or the EV charger an access token if the verification is successful in particular to prepare the secure full-duplex communication channel.

The access token may for example include an URL and/or an IP address of the EV charger such that the user's mobile device may perform an opening handshake with the EV charger over the network based on the URL and/or IP address of the EV charger included in the access token to establish for example a (direct) WebSocket Secure connection between the user's mobile device and the EV charger.

According to embodiments of the present disclosure, no additional third-party backend is involved in the verification of the authentication token (i.e. a communication occurs only with the trusted infrastructure of the CPO for the verification of the authentication token) and once the WebSocket secure connection is established between the user's mobile device and the EV charger, a secure full-duplex TCP/IP communication with TLS encryption occurs (directly) between the EV charger and the users's mobile device without any backend involved.

This significantly speeds up the communication and responsiveness between the user's mobile device and the EV charger providing a secure, near-instantaneous communication channel between the EV charger and a mobile app of the user. A high level of security is provided while an integration with the mobile app of the user is simplified and additional backends are not required, i.e. an integration e.g. between different data formats is not required.

The (direct) WebSocket according to embodiments of the present disclosure eliminates the need for integration with third-parties backends, like e.g. an integration with a separate backend of a charging station management system, thereby reducing costs and implementation time.

The (direct) WebSocket connection according to embodiments of the present disclosure offers real-time communication between the charger and the mobile app, improving user experience and avoiding the time lag experienced for example when remote backend(s) need to communicate in the background and/or when a (direct) TCP/IP connection between the user's mobile device and the EV charger is not present and/or when the TLS encryption is not maintained and/or when an integration with different data formats of the backend(s) is required.

The (direct) WebSocket connection according to embodiments of the present disclosure avoids the need to extend standards like OCPP (Open Charge Point Protocol) and an OCPI (Open Charge Point Interface) that were not intended for an additional communication with a mobile device of the user and it becomes possible to route the communication between the user's mobile device and the EV charger exclusively or primarily over e.g. the secure WebSocket.

In some embodiments, the authentication token is a signed authentication token.

The EV charger according to the present disclosure may comprise a central computing unit, for example a SBS (Single Board Computer) that may for example run the Android operating system, which may host several key components, such as:
- A Human Machine Interface (HMI) configured to manage user interactions, control LEDs, read sensor information, and handle authorization;
- An Event Broker configured to facilitate abstraction by allowing agents to publish and subscribe to hardware events;
- A Mobile App Agent responsible for handling a communication between the mobile app and the EV charger, for example translating WebSocket messages into MQTT messages for internal processing;
- A Remote Management Agent configured to manage the communication for example with a trusted cloud backend through a secure IoT channel.

Any type of signature may be used such that the user and/or the user's mobile device can verify the signature of the authentication token.

In some embodiments, the signature may be based on a private key of the electric vehicle charger and/or of the charge point operator and the user verifies, by the user's mobile device, the authentication token with a public key of the electric vehicle charger and/or of the charge point operator as provided within a public key infrastructure and/or by a certificate authority.

The signature may be a signature of data related to the electric vehicle charger, for example data including a current timestamp.

Alternatively or in addition, the signature may be a signature of a hash of the timestamp and/or of additional data related to the electric vehicle charger.

In some embodiments, alternatively or in addition, the signed authentication token is based on a timestamp and a secret known to a trusted infrastructure of the electric vehicle charger, and the signed authentication token may include a hash function of the timestamp and the secret.

The secret may be a shared secret or a private key.

The trusted infrastructure may include the electric vehicle charger and/or a trusted cloud (140). The trusted infrastructure may be located on the premises of the EV charger and/or (partially or fully) located at a remote site. The trusted infrastructure may be connected to the mobile app and/or to the EV charger via a network connection such as Internet, preferably using an encrypted communication protocol.

According to the present embodiments a trusted cloud may form a trusted cloud backend infrastructure configured to securely communicate with EV chargers, to validate a proximity authentication token according to embodiments of the present disclosure and to manage an access control.

The trusted backend according to the present disclosure may comprise components such as:
- An authentication server configured to validate the authentication token, e.g. validating a QR code and/or NFC (near field communication) token of the authentication token having a signature to authenticate the token and/or the user;
- A database of cryptographic secrets used for signing the authentication token, e.g. used in order to sign a QR code and/or NFC token forming the authentication token;
- A socket server configured to manage real-time connections for providing a communication between the EV charger and a mobile app of the user's mobile device.

For example, in some embodiments, the signed authentication token may include a time-based one-time password formed using the secret. For example, a hash of data including the shared secret and the timestamp may form the one-time password that is included in the authentication token according to some embodiments.

In some embodiments, verifying, by the user's mobile device, the authentication token comprises:
- retrieving the time-based one-time password from the signed authentication token;
- transmitting, by the user's mobile device, the time-based one-time password to the trusted infrastructure;
- receiving, by the user's mobile device, a confirmation of the validity of the time-based one-time password from the trusted infrastructure;
in particular wherein the access token is provided by the trusted infrastructure.

In said embodiments the shared secret and the hash function may be used instead of a public key to obtain the signature of the signed authentication token.

In some embodiments, the access token includes a network address and/or domain name and/or uniform resource locator and/or port of the electric vehicle charger configured to establish the secure full-duplex communication channel between the user's mobile device and the electric vehicle charger.

A unique IP address and/or TCP port may then be determined to establish the secure full-duplex communication channel between the user's mobile device and the electric vehicle charger.

In some embodiments, the at least one command is a push message sent by the mobile device, and its receipt by the electric vehicle charger triggers an event at the electric vehicle charger.

In particular, the communication may use an event architecture. For example, the event architecture may be provided by a Message Queuing Telemetry Transport (MQTT)-based event broker, thereby ensuring flexibility and modularity.

In some embodiments, a mobile app SDK (software development kit) is provided to the user's device. The mobile app SDK is configured to provide a simplified integration between the mobile app of the user's device and the EV charger and the SDK abstracts away the technical complexities of e.g. a WebSocket management according to embodiment so the present disclosure, providing a simple local API (application programming interface) for communication.

In some embodiments, upon receipt of the at least one status information data, the mobile device displays the status information data on a display of the mobile device.

Alternatively or in addition, in some embodiments the information may be any type of information related to a charging of the electric vehicle and/or to the battery of the electric vehicle and/or further data related to the user.

Alternatively or in addition, in some embodiments data may also be displayed on a human machine interface of the EV charger.

For example, in some embodiments, a human-machine interface (HMI) of the charger may be controlled in function of the user.

For example, the HMI of the charter may display a personalized greeting, when the driver connects, such as "Welcome" further displaying the driver's name.

Alternatively or in addition, in some embodiments personalized advertisements or coupons could be displayed, for instance, showing offers based on previous shopping behavior.

In some embodiments, drivers/users may track the charging session of the EV using the user's mobile device in particular using a mobile app installed on the user's mobile device.

For example, a live activity may be displayed on the user's mobile device, e.g. with dynamic island and lock screen notifications.

For example, drivers/users can track the charging session via the user's mobile device, e.g via the app installed on the mobile device.

In some embodiments, the secure full-duplex communication channel is persistent during the charging process.

In some embodiments, the secure full-duplex communication channel is based on a WebSocket communication protocol.

In particular, the WebSocket allows a real-time charging session tracking. The WebSocket connection enables in particular users to track the state of charge, power output, and any errors through a mobile app of the user which mirrors the EV charger's real time status.

In some embodiments, the at least one command from the user's mobile device includes information about an electric vehicle and an instruction to charge the electric vehicle;

For example, a mobile app on the user's mobile device may store a vehicle's make and model, and communicate this information to the charger in particular providing an improved troubleshooting, optimizations in the charging process, and a better user experience. For example, in case of locking issues, the HMI can instruct the user to press the car unlock button on the key fob twice, if it knows that said technique is applicable to the specific make and model.

In some embodiments, receiving, by the user's mobile device, status information data from the electric vehicle charger includes receiving status information about a charging of a battery of the electric vehicle.

In some embodiments, the status information further comprises information about a payment of electric energy used to charge the battery of the electric vehicle.

For example, during payment, the charger HMI can reflect the current progress made in the mobile app, reducing confusion for the user. Conversely, once payment is complete, the HMI and the mobile app on the user's mobile device are both updated in real-time, including instructions or error handling.

In some embodiments, the authentication token is digitally readable code provided with a display of the electric vehicle charger and/or a Near Field Communication token provided with a Near Field Communication interface of the electric vehicle charger, and/or wherein the network is the Internet and/or a wireless or wired Local Area Network.

For example, methods and systems according to the present disclosure may use a dynamically changing QR code or programmable NFC token to establish a secure connection between the mobile app and the EV charger. The QR codes may incorporate a Time-Based One-Time Password (TOTP) mechanism, ensuring that only users physically present at the charger can connect.

In some embodiments, the signed authentication token is based on a timestamp and a shared secret and a hash function to form a time-based one-time password included in the signed authentication token, the shared secret being shared between the electric vehicle charger and a trusted cloud (140).

In some embodiments, the access token includes a network address and/or domain name and/or uniform resource locator and/or port of the electric vehicle charger configured to establish the secure full-duplex communication channel between the user's mobile device and the electric vehicle charger; and the secure full-duplex communication channel is based on a WebSocket communication protocol.

In some embodiments, the at least one command from the user's mobile device includes information about an electric vehicle and an instruction to charge the electric vehicle;
and the status information data includes status information about a charging of a battery of the electric vehicle.

In some embodiments, the status information further comprises information about a payment of electric energy used to charge the battery of the electric vehicle.

Some embodiments further comprise:
- verifying, by the user's mobile device, the authentication token in real time (i.e., within the process and before the step of obtaining an access token is carried out)

In some embodiments, the secure full-duplex communication channel is encrypted; providing a virtually local channel due to direct access (e.g., via API).

In some embodiments, the full-duplex communication channel is two-way channel implemented with websocket as defined by RFC 6455.

In some embodiments, users/drivers can trach the charging session via a mobile app. Depending on the mobile app implementation, a Live Activity with dynamic island and lock screen notifications may be provided. Push notification may be provided to the user's app on the mobile device.

In some embodiments, real-time data includes a current state of charge, current charging power, and potentially charging errors. If the make an model of the EV is known, the real-time data may further comprise a prediction of the remaining charging time. After a charging session, receipts can be automatically generated and made available within the app for expense filing. An app could use this information to generate a monthly report, with details like session date, location, energy consumed, and cost.

Embodiments of the present disclosure provide a proximity authentication using a dynamically changing QR code or a dynamic NFC tag, changing for example every minute and/or every time period in an interval ranging from some seconds to some minutes relying on a shared secret between a trusted infrastructure and the EV charger to generate for example a signed SHA256 hast, forming a TOTP token. The shared secret can be modified/rotated from the trusted backend, using an already present Internet-ofThings (IoT) channel between charger and trusted infrastructure backend.

For example, when the QR code is scanned, the mobile app on the user's device communicates with the trusted infrastructure to validate the token, ensuring that the request is genuine and valid in real-time. Once validated, an access token is issued, and the charger and mobile app establish a secure TLS-encrypted WebSocket connection.

The QR code signature may contain a time component in order to prevent replay attaches.

## Claims

1. A method for controlling an electric vehicle charger (100) over a network by a user using a mobile device (110) of the user, the method comprising:
- providing, to the user's mobile device, an authentication token related to the electric vehicle charger, the authentication token being available to the user locally at a location of the electric vehicle charger;
- verifying, by the user's mobile device, the authentication token;
- obtaining, by the user's mobile device, an access token of the electric vehicle charger based on the verified authentication token;
- performing an opening handshake between the user's mobile device and the electric vehicle charger over the network based on the access token of the electric vehicle charger;
- upon the opening handshake, establishing a secure full-duplex communication channel (120) between the user's mobile device and the electric vehicle charger using a transmission control protocol connection over the network;
- receiving, by the electric vehicle charger, at least one command from the user's mobile device over the established secure full-duplex communication channel; and carrying out the received at least one command by the electric vehicle charger; and
- receiving, by the user's mobile device, status information data from the electric vehicle charger over the established secure full-duplex communication channel; and displaying the received status information data by the user's mobile device.

2. The method of claim 1, wherein the authentication token is a signed authentication token.

3. The method of claim 2, wherein the signed authentication token is based on a timestamp and a secret known to a trusted infrastructure of the electric vehicle charger, and wherein the signed authentication token includes a hash function of the timestamp and the secret, in particular wherein the secret may be a shared secret or a private key and the trusted infrastructure may include the electric vehicle charger and/or a trusted cloud (140).

4. The method of claim 3, wherein the signed authentication token includes a time-based one-time password formed using the secret;
and wherein preferably verifying, by the user's mobile device, the authentication token comprises:
- retrieving the time-based one-time password from the signed authentication token;
- transmitting, by the user's mobile device, the time-based one-time password to the trusted infrastructure;
- receiving, by the user's mobile device, a confirmation of the validity of the time-based one-time password from the trusted infrastructure;
in particular wherein the access token is provided by the trusted infrastructure.

5. The method of any one of the preceding claims, wherein the access token includes a network address and/or domain name and/or uniform resource locator and/or port of the electric vehicle charger configured to establish the secure full-duplex communication channel between the user's mobile device and the electric vehicle charger;

6. The method of any one of the preceding claims, wherein
the at least one command is a push message sent by the mobile device, and its receipt by the electric vehicle charger triggers an event at the electric vehicle charger to implement a communication based on event architecture.

7. The method of any one of the preceding claims, wherein
upon receipt of the at least one status information data, the mobile device displays the status information data on a display of the mobile device.

8. The method of any one of the preceding claims, wherein the secure full-duplex communication channel is persistent during the charging process.

9. The method of any one of the preceding claims, wherein the secure full-duplex communication channel is based on a WebSocket communication protocol.

10. The method of any one of the preceding claims, wherein the at least one command from the user's mobile device includes information about an electric vehicle and an instruction to charge the electric vehicle;

11. The method of any one of the preceding claims, wherein receiving, by the user's mobile device, status information data from the electric vehicle charger includes receiving status information about a charging of a battery of the electric vehicle.

12. The method of claim 11, wherein the status information further comprises information about a payment of electric energy used to charge the battery of the electric vehicle.

13. The method of any one of the preceding claims, wherein the authentication token is digitally readable code provided with a display of the electric vehicle charger and/or a Near Field Communication token provided with a Near Field Communication interface of the electric vehicle charger, and/or wherein the network is the Internet and/or a wireless or wired Local Area Network.

14. An electric vehicle (100) charger comprising a controller connected to a network, the electric vehicle charger configured to:
- provide to a user's mobile device (110) an authentication token locally at a location of the electric vehicle charger;
- perform an opening handshake with the user's mobile device over the network based on an access token;
- upon the opening handshake, establish a secure full-duplex communication channel (120) between the user's mobile device and the electric vehicle charger using a transmission control protocol connection over the network;
- receive at least one command from the user's mobile device over the established secure full-duplex communication channel; and to carry out the received at least one command; and
- send to the user's mobile device, status information data over the established secure full-duplex communication channel.

15. The electric vehicle charger of claim 14, wherein the authentication token is a signed authentication token.
